# EUROPÄISCHE PATENTSCHRIFT

(11) **EP 1 533 336 B1**
(45) Veröffentlichungstag und Bekanntmachung des Hinweises auf die Patenterteilung: **14.01.2009**
(21) Anmeldenummer: 04025249.6
(22) Anmeldetag: 23.10.2004
(51) Int. Cl.: C08K 5/548, C08K 5/40, C08K 9/06

(54) **Kautschukmischungen**
Rubber mixtures
Mélanges de caoutchouc.

(30) Priorität: 21.11.2003 DE 10354616
(43) Veröffentlichungstag der Anmeldung: 25.05.2005
(73) Patentinhaber: Evonik Degussa GmbH, 45128 Essen (DE)
(72) Erfinder: Klockmann, Oliver, Dr., 52382 Niederzier (DE); Hasse, Andre, 52441 Linnich (DE); Luginsland, Hans-Detlef, Dr., Hoboken, New-Jersey 07030 (US)

(56) Entgegenhaltungen:
- EP-A- 0 992 505
- EP-B- 0 732 362
- WO-A-03/020813
- DE-A1- 10 223 658
- US-A- 4 003 843
- US-A- 6 127 468

## Beschreibung

Die Erfindung betrifft Kautschukmischungen, ein Verfahren zu ihrer Herstellung und ihrer Verwendung.

Es ist bekannt, Silane als Haftvermittler einzusetzen. So werden Aminoalkyltrialkoxysilane, Methacryloxyalkyltrialkoxysilane, Polysulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt (E.P. Plueddemann, "Silane Coupling Agents", 2nd Ed. Plenum Press 1982).

Diese Haftvermittler beziehungsweise Kupplungs- oder Verbindungsagenzien bilden sowohl zum Füllstoff als auch zum Elastomer Bindungen und bewirken somit zwischen der Füllstoffoberfläche und dem Elastomer eine gute Wechselwirkung.

Desweiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole, Methanol und Ethanol, in erheblichen Mengen freigesetzt.

Ferner ist aus DE 10015309 bekannt, dass die Verwendung eines Mercaptosilans in Kombination mit einem langkettigen Alkylsilan in Gummimischungen zu einer erhöhten Verstärkung und einem erniedrigten Hystereseverlust führt. Das Alkylsilan ist notwendig, um eine sichere Verarbeitbarkeit der Kautschukmischung zu gewährleisten.

Es ist weiterhin bekannt, daß Methoxy- und Ethoxysubstituierte Silane reaktiver sind als die entsprechenden langkettigen Alkoxy-substituierten Silane und somit schneller an den Füllstoff anbinden können, so daß auf den Einsatz von Methoxy- und Ethoxy-Substituenten aus technischer und wirtschaftlicher Sicht nicht verzichtet werden kann.

Aus DE 10137809 sind Organosiliciumverbindungen der allgemeinen Formel 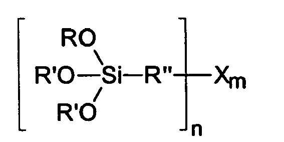 oder der allgemeinen Formel 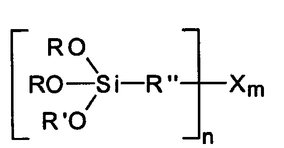 bekannt, wobei R eine Methyl- oder Ethyl-Gruppe ist,
R' gleich oder verschieden und eine C₉-C₃₀ verzweigte oder unverzweigte einbindige Alkyl- oder Alkenyl-Gruppe, Arylgruppe, Aralkylgruppe, verzweigte oder unverzweigte C₂-C₃₀ Alkylethergruppe, verzweigte oder unverzweigte C₂-C₃₀ Alkylpolyethergruppe ist,
R" eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
X ist NH(₃-,) mit n=1,2,3 und m=1, O(C=O)-R'" mit n=1 und m=1, SH mit n=1 und m=1, S mit n=2 und m=1-10 und Gemische davon, S(C=O)-R'" mit n=1 und m=1 oder H mit n=1 und m=1, mit R'" gleich C₁-C₃₀ verzweigte oder unverzweigte Alkyloder Alkenyl-Gruppe, Aralkylgruppe oder Arylgruppe.

Ferner sind aus DE 10223658 Organosiliciumverbindungen der allgemeinen Formel 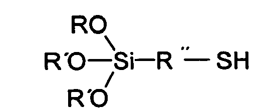 oder 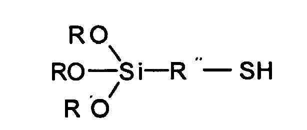 bekannt, wobei R eine Methyl- oder Ethyl-Gruppe ist,
R' gleich oder verschieden und eine C₉-C₃₀ verzweigte oder unverzweigte einbindige Alkylgruppe ist,
R" eine verzweigte oder unverzweigte, gesättigte oder ungesättigte, aliphatische, aromatische oder gemischt aliphatische /aromatische zweibindige C₁-C₃₀ Kohlenwasserstoffgruppe ist, R' ein Gemisch ist und der Anteil einer Komponente des Gemisches 10 bis 50 Mol-% beträgt.
Nachteil der bekannten Kautschukmischungen, enthaltend Mercaptosilane mit langkettigen Alkoxygruppen, ist die kurze Inkubationszeit und die kurze Mooneyscorchzeit, die keine sichere Verarbeitbarkeit gewährleisten.

Aus WO 03/020813 ist bekannt, dass sich die Mooneyscorchzeit von kieselsäurehaltigen Kautschukmischungen dadurch verlängern läßt, daß auf die bei kieselsäurehaltigen Kautschukmischungen übliche Zugabe von Diphenylguanidin verzichtet wird, bei gleichzeitiger Erhöhung eines Thiuramdisulfidzüsatzes und bei gleichzeitiger Zugabe eines Polyalkylenoxids. Nachteilig ist hierbei die Zugabe eines Polyalkylenoxids, da es in die Vernetzungsdichte eingreift (Technical Report TR 818 der Degussa AG).

Aus US 6,127,468 sind Kautschukmischungen enthaltend Kautschuk, Füllstoff und ein blockiertes Mercaptosilan bekannt. Als Beschleuniger können ein oder zwei Beschleuniger eingesetzt werden.

Ferner sind aus EP 0992505 A2 Kautschukmischungen enthaltend Sulfanylsilane der Formel X¹X²XSi-A-S-SiR¹R²R³ bekannt.

Aus US 4,003,843 sind Kautschukmischungen mit Thiazol-, Guanindin- und Thiurambeschleuniger bekannt.

Aufgabe der vorliegenden Erfindung ist es Kautschukmischungen, enthaltend Mercaptosilane, zur Verfügung zu stellen, die eine Inkubationszeit ähnlich de polysulfidischen Organosilanen aufweist und somit eine sichere Verarbeitbarkeit gewährleistet.

Gegenstand der Erfindung sind Kautschukmischungen, enthaltend
(A) einen Kautschuk oder eine Mischung von Kautschuken,
(B) einen Füllstoff,
(C) ein Organosilan der allgemeinen Formel I 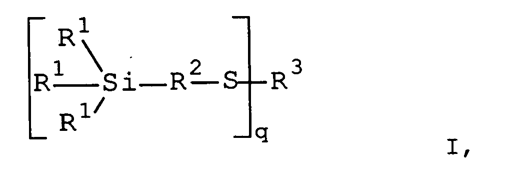 wobei R¹ gleich oder verschieden und aus C₁-C₁₂-Alkylgruppe oder R⁴O-Gruppe, mit R⁴ gleich oder verschieden und eine C₁-C₃₀ verzweigte oder unverzweigte einbindige Alkyl-, vorzugsweise Methyl, Ethyl, Propyl oder C₉-C₃₀ Alkylgruppe, Alkenyl-, Aryl-, Aralkylgruppe oder (R⁵)₃Si-Gruppe, mit R⁵ gleich C₁-C₃₀ verzweigten oder unverzweigten Alkyl- oder Alkenyl-Gruppe, ist, bestehen,
   R² eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
   R³ gleich H, CN oder (C=O)-R⁶ für q=1, mit R⁶ gleich C₁-C₃₀, vorzugsweise C₅-C₂₀, besonders bevorzugt C₇, verzweigte oder unverzweigte einbindige Alkyl-, Alkenyl-, Aryl- oder Aralkylgruppe, (C=O) für q=2 und P=S für q=3 ist und q=1-3,
(D) ein Thiurambeschleuniger,
(E) ein stickstoffhaltigen Co-Aktivator, und
(F) ein Sulfinamid-Beschleuniger,
dadurch gekennzeichnet, daß das Gewichtsverhältnis Thiurambeschleuniger (D) zu stickstoffhaltigen Co-Aktivator (E) größer 1, vorzugsweise von 1,0 - 4,0, ist.

Als Kautschuk (A) können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem
- Polybutadien (BR)
- Polyisopren (IR)
- Styrol/Butadien-Copolymerisate mit Styrolgehalten von 1 bis 60, vorzugsweise 5 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- Ethylen/Propylen/Dien-Copolymerisate (EPDM)
sowie Mischungen dieser Kautschuke umfassen.

Als Kautschuk (A) können Lösungs-SBR, vorzugsweise Lösungs-SBR mit einem Vinylgehalt von mindestens 50%, eingesetzt werden.

In einer bevorzugten Ausführungsform können die Kautschuke schwefelvulkanisierbar sein.

Als Füllstoff (B) können silikatische Füllstoffe, beispielsweise gefällte oder pyrogene Kieselsäuren, oder Ruß eingesetzt werden. Die Kieselsäure kann eine BET-Oberfläche von 100 m²/g bis 250 m²/g haben.

Das Organosilan der allgemeinen Formel I (C) kann ein Gemisch aus unterschiedlichen Organosilanen der Formel I sein.

Das Gemisch aus unterschiedlichen Organosilanen der Formel I kann Organosilane der allgemeinen Formel I mit unterschiedlichen Gruppen R⁴ enthalten.

Das Organosilan der allgemeinen Formel I (C) kann ein Mercaptopropyltrialkoxysilan der allgemeinen Formel II 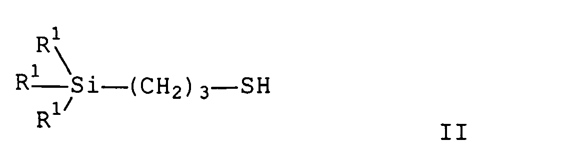 sein, bei dem R¹ aus Ethoxy, Dodecoxy, Tetradecoxy, Hexadecoxy und Octadecoxy ausgewählt mit Anteilen von jeweils 0% bis 100% sind.

Das Organosilan der allgemeinen Formel I (C) kann ein Mercaptopropyltrialkoxysilan sein, bei dem die Alkoxygruppen R⁴O ein Gemisch aus Ethoxy-, Dodecoxy- und Tetradecoxy-Gruppen, vorzugsweise aus durchschnittlich 0,8-1,2 Ethoxy-, 1,2-1,6 Dodecoxy- und 0,4-0,8 Tetradecoxy-Gruppen, ist.

Das Organosilan der allgemeinen Formel I (C) kann ein Mercaptopropyltrialkoxysilan sein, bei dem die Alkoxygruppen R⁴O ein Gemisch aus Ethoxy- und Tetradecoxy-Gruppen, vorzugsweise aus durchschnittlich 0,8-1,2 Ethoxyund 1,8-2,2 Tetradecoxy-Gruppen, ist.

Das Organosilan der allgemeinen Formel I (C) kann ein Mercaptopropyltrialkoxysilan sein, bei dem die Alkoxygruppen R⁴O ein Gemisch aus Ethoxy-, Hexadecoxy- und Octadecoxy-Gruppen, vorzugsweise aus durchschnittlich 0,8-1,2 Ethoxy-, 0,8-1,2 Hexadecoxy- und 0,8-1,2 Octadecoxy-Gruppe, ist.

Das Organosilan der Formel I (C) kann auf einem Träger aufgebracht sein. Als Träger kann beispielsweise Ruß, Aluminiumoxid, Wachs, Thermoplaste, Kieselsäure oder Silikate eingesetzt werden. Das Organosilan der Formel I (C) kann auf einem anorganischen Träger aufgezogen oder mit einem organischen oder anorganischen Träger vorreagiert haben.

Als Thiurambeschleuniger (D) können Thiuramsulfidbeschleuniger, vorzugsweise Thiurammonosulfide, Thiuramdisulfide, Thiuramtetrasulfide oder Thiuramhexasulfide, besonders bevorzugt Tetrabenzylthiuramdisulfid oder Tetramethylthiuramdisulfid, eingesetzt werden.

Als stickstoffhaltigen Co-Aktivator (E) können Amin Co-Aktivatoren eingesetzt werden. Als Amin Co-Aktivator können Guanidine, bevorzugt Diphenylguanidin, eingesetzt werden.

Die Kautschukmischungen können 10 bis 150 Gew.-Teile Füllstoff (B), bezogen auf 100 Gew.-Teile Kautschuk, enthalten. Die Kautschukmischungen können 0,1 bis 20 Gew.-Teile Organosilan der Formel I (C), bezogen auf 100 Gew.-Teile Kautschuk, enthalten. Die Kautschukmischungen können 0,02 bis 4 Gew.-Teile, bevorzugt 0,02 bis 1 Gew.-Teile, Thiurambeschleuniger (D), bezogen auf 100 Gew.-Teile Kautschuk, enthalten. Die Kautschukmischungen können 0 bis 2 Gew.-Teile, bevorzugt 0,1 bis 2 Gew.-Teile, besonders bevorzugt 0,2 bis 0,5 Gew.-Teile, stickstoffhaltigen Co-Aktivator (E), bezogen auf 100 Gew.-Teile Kautschuk, enthalten.

Die Kautschukmischungen können 10 bis 150 Gew.-Teile Füllstoff (B), 0,1 bis 20 Gew.-Teile Organosilan der Formel I (C), 0,02 bis 4 Gew.-Teile, bevorzugt 0,02 bis 1 Gew.-Teile, Thiurambeschleuniger (D) und 0 bis 2 Gew.-Teile, bevorzugt 0,1 bis 2 Gew.-Teile, besonders bevorzugt 0,2 bis 0,5. Gew.-Teile, stickstoffhaltigen Co-Aktivator (E) enthalten, wobei die Gew.-Teile auf 100 Gew.-Teile Kautschuk bezogen sind.

Die Kautschukmischungen können mindestens 0,25 Gew.-Teile Tetrabenzylthiuramdisulfid oder Tetramethylthiuramdisulfid, bezogen auf 100 Gewichtsteile Kautschuk, und maximal 0,25 Gew.-Teile Diphenylguanidin, bezogen auf 100 Gewichtsteile Kautschuk, enthalten.

Die Kautschukmischungen können kein Alkylenoxid enthalten.

Die Kautschukmischungen können zusätzlich Silikonöl und/oder Alkylsilan enthalten.

Die erfindungsgemäßen Kautschukmischungen können weitere bekannte Kautschukhilfsmittel, wie zum Beispiel Vernetzer, Vulkanisationsbeschleuniger, Reaktionsbeschleuniger, Reaktionsverzögerer, Alterungsschutzmittel, Stabilisatoren, Verarbeitungshilfsmittel, Weichmacher, Wachse, Metalloxide sowie Aktivatoren enthalten.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.

Als Vernetzer können Schwefel oder organische Schwefelspender eingesetzt werden.

Die erfindungsgemäßen Kautschukmischungen können weitere Vulkanisationsbeschleuniger enthalten. Beispiele für geeignete Vulkanisationsbeschleuniger können Mercaptobenzthiazole, Sulfenamide, Guanidine, Dithiocarbamate, Thioharnstoffe und Thiocarbonate sein.

Vorzugsweise können Sulfenamid-Beschleuniger, beispielsweise Cylohexylbenzothiazolsulfenamid und / oder Dicyclohexylbenzothiazolsulfenamid und / oder Butylbenzothiazolsulfenamid, eingesetzt werden.

Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden.

Ein weiterer Gegenstand der Erfindung ist ein Verfahren zur Herstellung der erfindungsgemäßen Kautschukmischungen, welches dadurch gekennzeichnet ist, daß man den Kautschuk oder die Mischung von Kautschuken (A), einen Füllstoff (B), ein Organosilan der allgemeinen Formel I (C), ein Thiurambeschleuniger (D) und ein stickstoffhaltigen Co-Aktivator (E) in einem Mischaggregat mischt, wobei das Gewichtsverhältnis Thiurambeschleuniger (D) zu stickstoffhaltigem Co-Aktivator (E) gleich oder größer 1 ist.

Das Mischen kann bei einer Temperatur kleiner 165 °C erfolgen.

Die Abmischung der Kautschuke mit dem Füllstoff, gegebenenfalls Kautschukhilfsmitteln und der Organosilane kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die Organosilane und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200 °C, bevorzugt 130 bis 180°C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Die erfindungsgemäßen Kautschukmischungen weisen den Vorteil auf, dass diese eine Inkubationszeit ähnlich den Kautschukmischungen mit polysulfidischen Organosilanen besitzen und somit eine sichere Verarbeitbarkeit gewährleisten.

Ein weiterer Vorteil ist, daß sich die Vernetzungsdichte der erfindungsgemäßen Kautschukmischungen im Vergleich zu Kautschukmischungen mit einem Gewichtsverhältnis Thiurambeschleuniger (D) zu stickstoffhaltigen Co-Aktivator (E) kleiner 1 nicht ändert. Die vorteilhaften Vulkanisatdaten der mercaptosilanhaltigen Kautschukmischungen bleiben erhalten.

### Beispiele:

### Beispiel 1-2

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks.

Das für das Beispiel verwendete Silan A besitzt die Struktur entsprechend der folgenden Formel II 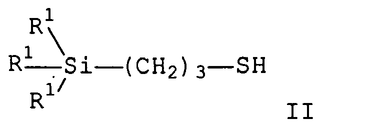 mit R¹= einem Gemisch aus Ethoxy und R⁴O-Gruppen im Verhältnis 1:2, wobei die R⁴O-Gruppen ein Gemisch aus Dodecoxy und Tetradecoxy im Massenverhältnis 70:30 sind. Das Silan A wird folgendermaßen hergestellt:
In einem 10-Liter Vierhalskolben wird ein Gemisch, bestehend aus 2,925 Kg Mercaptopropyltriethoxysilan (Formel II mit R¹=CH₃CH₂O) und 4,753 Kg eines Gemisches aus 70 Gew.-% Dodecanol (CH₃-(CH₂)₁₁-OH) und 30 Gew.-% Tetradecanol (CH₃-(CH₂)₁₃-OH) mit 1,464 ml Tetra-n-butyl-orthotitanat auf 110°C erhitzt und entstehendes Ethanol innerhalb von 4h im Vakuum bei maximal 50mbar abdestilliert. Man erhält 6,47 Kg (98% der Theorie) eines farblosen, flüssigen Mercaptopropyltrialkoxysilans der Formel II, bei dem die R¹-Gruppen ein Gemisch aus Ethoxy-, Dodecoxy- und Tetradecoxy-Gruppen mit durchschnittlich 1 Ethoxy-, 1,5 Dodecoxy- und 0,5 Tetradecoxy-Gruppen sind.

In der Referenzmischung 3 und den Beispielen sind die Grundmischungen (1. + 2. Stufe) identisch. Sie unterscheiden sich nur in den eingesetzten Mengen des Beschleunigers DPG und des Ultrabeschleunigers TBzTD (3. Stufe). Die Referenzmischung 1 enthält das Organosilan Si 69. Da Si 69 ein Schwefeldonor ist und das Mercaptosilan kein Schwefeldonor ist, ist in der Referenzmischung 1 und in der Referenzmischung 2 zum Ausgleich weniger Schwefel eingesetzt als in der Referenzmischung 3 und den Beispielmischungen 1-2 mit dem Mercaptosilan.

**Tabelle 1**

| Substanz | Menge [phr] | Menge [phr] | Menge [phr] | Menge [phr] | Menge [phr] |
|---|---|---|---|---|---|
| 1. Stufe | Ref. 1 | Ref. 2 | Ref. 3 | Bsp. 1 | Bsp. 2 |
| Buna VSL 5025-1 | 96 | 96 | 96 | 96 | 96 |
| Buna CB 24 | 30 | 30 | 30 | 30 | 30 |
| Ultrasil 7000 GR | 80 | 80 | 80 | 80 | 80 |
| ZnO | 3 | 3 | 3 | 3 | 3 |
| Stearinsäure | 2 | 2 | 2 | 2 | 2 |
| Naftolen ZD | 10 | 10 | 10 | 10 | 10 |
| Vulkanox 4020 | 1,5 | 1,5 | 1,5 | 1,5 | 1,5 |
| Protector G35P | 1 | 1 | 1 | 1 | 1 |
| Si 69 | 6,4 | 6,4 4 | - | - | - |
| Silan A | - | - | 5,4 | 5,4 | 5,4 |

| 2. Stufe | | | | | |
|---|---|---|---|---|---|
| Batch Stufe 1 | | | | | |
| 3. Stufe | | | | | |
| Batch Stufe 2 | | | | | |
| Vulkacit D | 2 | 0,25 | 2 | 0,25 | 0,25 |
| Perkacit TBzTD | 0,2 | 0,6 | 0,2 | 0,5 | 0,75 |
| Vulkacit CZ | 1,5 | 1,5 | 1,5 | 1,5 | 1,5 |
| Schwefel | 1,5 | 1,5 | 2,2 | 2,2 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Das Kopplungsreagenz Si 69, ein Bis-(triethoxysilylpropyl)tetrasulfid, ist ein Produkt der Degussa AG.

Als aromatisches Öl wird Naftolen ZD der Chemetall verwendet, bei Vulkanox 4020 handelt es sich um 6PPD der Bayer AG und Protektor G35P ist ein Ozonschutzwachs der HB-Fuller GmbH. Vulkacit D (DPG, Diphenylguanidin) und Vulkacit CZ (CBS) sind Handelsprodukte der Bayer AG. Perkacit TBzTD (Tetrabenzylthiuramdisulfid) ist ein Produkt von Flexsys N.V..

Die Kautschukmischung wird dreistufig in einem Innenmischer gemäß Tabelle 2 hergestellt.

**Tabelle 2:**

| **Stufe 1** | |
|---|---|
| **Einstellungen** | |
| Mischaggregat | Werner & Pfleiderer GK 1.5E |
| Friktion | 1:1 |
| Drehzahl | 60 min⁻¹ |
| Stempeldruck | 5,5 bar |
| Leervolumen | 1,6 L |
| Füllgrad | 0,56 |
| Durchflußtemp. | 70 °C |

| **Mischvorgang** | |
|---|---|
| 0 bis 1 min | Buna VSL 5025-1 + Buna CB 24 |
| 1 bis 2 min | ½ Ultrasil 7000 GR, ZnO, Stearinsäure, Naftolen ZD, Silan |
| 2 bis 4 min | ½ Ultrasil 7000 GR, Vulkanox 4020, Protector G35P |
| 4 min | säubern |
| 4 bis 5 min | Mischen mit Drehzahlvariation um die Temperatur von 140-150°C zu halten |
| 5 min | säubern |
| 5 bis 6 min | mischen und ausfahren |
| | |
| Batch-Temp. | 140-150°C |
| Lagerung | 24 h bei Raumtemperatur |

| **Stufe 2** | |
|---|---|
| **Einstellungen** | |
| Mischaggregat | wie in Stufe 1 bis auf: |
| Drehzahl | 70 min⁻¹ |
| Füllgrad | 0,54 |
| Durchflußtemp. | 70 °C |

| **Mischvorgang** | |
|---|---|
| 0 bis 2 min | Batch Stufe 1 aufbrechen |
| 2 bis 5 min | Batchtemperatur 145-150°C durch Drehzahlvariation halten |
| 5 min | ausfahren |
| | |
| Batch-Temp. | 145-150°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min⁻¹ |
| Füllgrad | 0,52 |
| Durchflußtemp. | 50 °C |

| **Mischvorgang** | |
|---|---|
| 0 bis 2 min | Batch Stufe 2 + Vulkacit CZ + Vulkazit D + Perkacit TBzTD + Schwefel |
| 2 min | ausfahren und auf Labormischwalzwerk Fell bilden (Durchmesser 200 mm, Länge 450 mm, Durchflußtemperatur 50°C) |
| | |
| | Homogenisieren: 3* links, 3* rechts einschneiden und umklappen sowie 8* bei engem Walzenspalt (1 mm) und 3* bei weitem Walzenspalt (3,5 mm) stürzen und anschließend ein Fell ausziehen |
| | |
| Batch-Temp. | 90-100°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 3 angegebenen Prüfmethoden.

**Tabelle 3**

| | |
|---|---|
| Physikalische Testung | Norm/ Bedingungen |
| ML 1+4, 100°C (3. Stufe) | DIN 53523/3, ISO 667 |
| Anvulkanisationsverhalten, 130°C | DIN 53523/4, ISO 667 |
| Vulkameterprüfung, 165°C | DIN 53529/3, ISO 6502 |
| Dₘₐₓ - Dmin | |
| t10% | |
| t80% - t20% | |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 60°C | DIN EN ISO 8307 Stahlkugel 19 mm, 28 g |
| DIN-Abrieb, 10 N Kraft | DIN 53 516 |
| Viskoelastische Eigenschaften 0 und 60°C, 16 Hz, 50 N Vorkraft und 25 N Amplitudenkraft | DIN 53 513, ISO 2856 |
| Komplexer Modul E* (MPa) | |
| Verlustfaktor tan δ (-) | |
| Goodrich-Flexometertest 0,250 inch Hub, 25 min, 23 °C | DIN 53533, ASTM D 623 A |
| Kontakttemperatur (°C) | |
| Einstichtemperatur (°C) | |
| Permanent Set (%) | |

In der Tabelle 4 sind die gummitechnischen Daten für Rohmischung und Vulkanisat angegeben.

**Tabelle 4**

| **Rohmischungsdaten** | | | | | | |
|---|---|---|---|---|---|---|
| Merkmal: | Einheit: | Ref. 1 | Ref.2 | Ref.3 | Bsp. 1 | Bsp. 2 |
| ML(1+4) bei 100°C, 3.Stufe | [ME] | 62 | 63 | 55 | 59 | 58 |
| Scorch-Zeit, t5 | [min] | 27,1 | 33,7 | 9,4 | 19,2 | 17,5 |
| Scorch-Zeit, t35 | [min] | 36,4 | 40,9 | 12,4 | 24,1 | 21,1 |

| **Vulkanisatdaten** | | | | | | |
|---|---|---|---|---|---|---|
| Merkmal: | Einheit: | | | | | |
| Zugfestigkeit | [MPa] | 13,1 | 13,7 | 13,2 | 14,7 | 12,2 |
| Spannungswert 100% | [MPa] | 1,7 | 2,0 | 1,7 | 1,8 | 1,8 |
| Spannungswert 300% | [MPa] | 9,1 | 11,5 | 11,5 | 11,5 | 11,8 |
| Spannungswert 300%/100% | [-] | 5,4 | 5,8 | 6,8 | 6,4 | 6,6 |
| Bruchdehnung | [%] | 370 | 335 | 325 | 340 | 300 |
| Shore-A-Härte | [SH] | 60 | 64 | 56 | 57 | 60 |
| Ball-Rebound, 60°C | [%] | 65,8 | 68,1 | 75,8 | 75,2 | 75,6 |
| DIN-Abrieb | [mm³] | 85 | 73 | 68 | 59 | 61 |
| Kontakttemperatur | [°C] | 56 | 56 | 53 | 53 | 51 |
| Einstichtemperatur | [°C] | 101 | 98 | 94 | 93 | 91 |
| Permanent Set | [%] | 3,4 | 2,0 | 3,5 | 2,2 | 2,2 |
| Dyn. Dehnmodul E*, 0°C | [MPa] | 16,0 | 16,9 | 9,3 | 10 | 10 |
| Dyn. Dehnmodul E*, 60°C | [MPa] | 7,3 | 8,2 | 5,8 | 6,2 | 6,3 |
| Verlustfaktor tan δ, 0°C | [-] | 0,369 | 0,359 | 0,306 | 0,310 | 0,312 |
| Verlustfaktor tan δ, 60°C | [-] | 0,099 | 0,088 | 0,069 | 0,070 | 0,062 |

Referenzmischung 2 zeigt die Auswirkung des geänderten Thiuram / Amin-Coaktivator-Verhältnisses auf eine Kautschukmischung, die wie die Referenzmischung 1 Si 69 enthält. Vergleicht man die Referenzmischung 1 mit Referenzmischung 2, so zeigt sich , dass die Scorch-Zeit in der gleichen Größenordnung liegt.
Vergleicht man die Referenzmischung 1 mit Referenzmischung 3, so fällt auf, daß das Referenzmischung 3 mit Silan A deutliche Nachteile im Verarbeitungsverhalten aufweist. Sie besitzt niedrigere Scorch-Zeiten, was sich nachteilig auf die Verarbeitungsfähigkeit der beschleunigten Fertigmischung (z.B. bei Extrusion) auswirkt. Dadurch ergibt sich eine verschlechterte Verarbeitungssicherheit, da eine Vorvernetzung möglich ist.

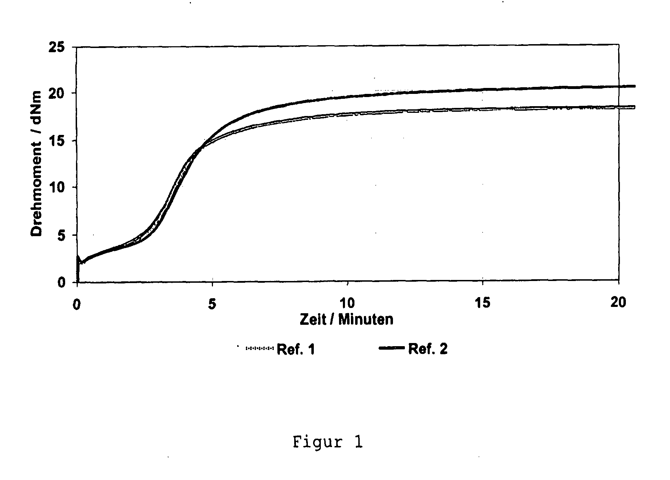

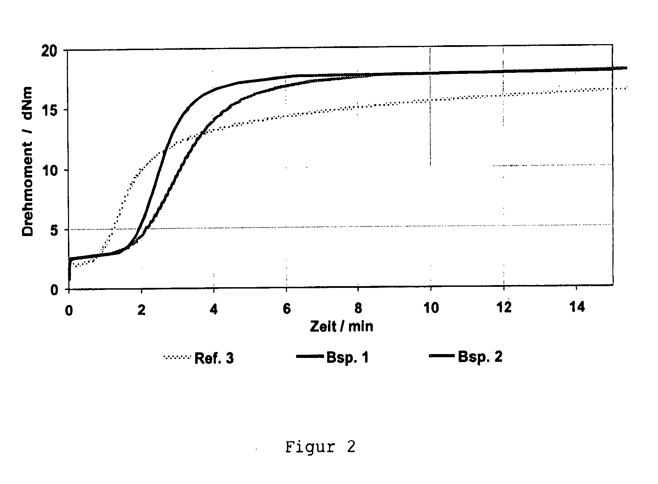

Gleichzeitig besitzt Referenzmischung 3 mit dem oben beschriebenen Silan erhebliche Vorteile in den Vul.kanisatdaten. Der Spannungswert bei 300% Dehnung und der Verstärkungsfaktor sind höher. Gleichzeitig ist die Elastizität (Ball-Rebound) erheblich höher und der DIN-Abrieb deutlich verbessert. Dies zeigt eine deutlich höhere Kopplungsausbeute zwischen Füllstoff und Polymer, die durch Silan A hervorgerufen wird. Auch der tan δ bei 60°C, der mit dem Rollwiderstand korreliert wird, ist deutlich besser für Referenzmischung 3.
Die beiden Beispiele 1 und 2 unterscheiden sich von Referenzmischung 3 in ihrer Zusammensetzung des Beschleunigersystems. Die Menge des Co-Aktivators DPG wurde deutlich reduziert und die des Ultrabeschleunigers TBzTD erheblich erhöht. Dabei verbessern sich die Rohmischungsdaten dieser Mischungen. Die Scorch-Zeit wird im Vergleich zum Referenzmischung 3 nahezu verdoppelt. Bei Mischungen mit Si 69 (Referenzmischung 2 im Vergleich zur Referenzmischung 1) ist dies nicht der Fall.
Den Einfluß des geänderten Aktivatorverhältnisses auf das Vulkanisationsverhalten zeigen die Figuren 1 und 2.

Wie man anhand der Figur 1 erkennt, hat die Veränderung des Beschleunigerverhältnisses bei der Referenz Si 69 kaum Einfluß auf die Inkubationszeit. In Figur 2 dagegen wird der positive Einfluß der Beschleunigervariation auf die Inkubationszeit deutlich. Der Beginn des Drehmomentanstiegs wird deutlich zu längeren Zeiten verschoben. Dadurch ergibt sich eine signifikant höhere Verarbeitungssicherheit. Zudem wird der Marching Modulus der Referenzmischung 3 in den Beispielen 1 und 2 eliminiert. Diese Ergebnisse sind überraschend, da bei der Verwendung größerer Mengen von TBzTD eine noch schnellere Vulkanisation erwartet worden wäre. Somit ergibt sich für Silan A ein Effekt, der bei Si 69 nicht beobachtet werden kann.
Durch die Veränderung der Beschleunigerkombination werden die Vulkanisatdaten nahezu nicht verändert. Die Rohmischungseigenschaften des Silans A können deutlich verbessert werden, ohne die guten Vulkanisatdaten zu verschlechtern.

### Beispiel 3-8:

Die für die hier beschriebenen Kautschukmischungen verwendete Rezeptur ist in der folgenden Tabelle 5 angegeben.
Die Kautschukmischung wird dreistufig in einem Innenmischer gemäß Tabelle 2 hergestellt.
Die gummitechnische Prüfung erfolgt gemäß den in Tabelle 3 angegebenen Prüfmethoden.

**Tabelle 5**

| Substanz | Menge [phr] | Menge [phr] | Menge [phr] | Menge [phr] | Menge [phr] | Menge [phr] | Menge [phr] | Menge [phr] |
|---|---|---|---|---|---|---|---|---|
| 1. Stufe | Ref. 4 | Ref. 5 | Bsp .3 | Bsp 4 . | Bsp 5 . | Bsp. 6 | Bsp .7 | Bsp. 8 |
| Buna VSL 5025-1 | 96 | 96 | 96 | 96 | 96 | 96 | 96 | 96 |
| Buna CB 24 | 30 | 30 | 30 | 30 | 30 | 30 | 30 | 30 |
| Ultrasil 7000 GR | 80 | 80 | 80 | 80 | 80 | 80 | 80 | 80 |
| ZnO | 3 | 3 | 3 | 3 | 3 | 3 | 3 | 3 |
| Stearinsäure | 2 | 2 | 2 | 2 | 2 | 2 | 2 | 2 |
| Naftolen ZD | 10 | 10 | 10 | 10 | 10 | 10 | 10 | 10 |
| Vulkanox 4020 | 1,5 | 1,5 | 1,5 | 1,5 | 1,5 | 1,5 | 1,5 | 1,5 |
| Protector G35P | 1 | 1 | 1 | 1 | 1 | 1 | 1 | 1 |
| Si 69 | 6,4 | - | - | - | - | - | - | - |
| Silan A | - | 5,4 | 5,4 | 5,4 | 5,4 | 5,4 | 5,4 | 5,4 |

| 2. Stufe | | | | | | | | |
|---|---|---|---|---|---|---|---|---|
| Batch Stufe 1 | | | | | | | | |
| 3. Stufe | | | | | | | | |
| Batch Stufe 2 | | | | | | | | |
| Vulkacit D | 2 | 2 | 0,25 | 0,25 | 0,25 | 0,25 | 0 | 0 |
| Perkacit TBzTD | 0,2 | 0,2 | 0,25 | 0,5 | 0,75 | 1 | 0,75 | 1 |
| Vulkacit CZ | 1,5 | 1,5 | 1,5 | 1,5 | 1,5 | 1,5 | 1,5 | 1,5 |
| Schwefel | 1,5 | 2,2 | 2,2 | 2,2 | 2,2 | 2,2 | 2,2 | 2,2 |

In der Tabelle 6 sind die gummitechnischen Daten für die untersuchten Mischungen aus Tabelle 5 angegeben.

**Tabelle 6**

| **Rohmischungsdaten** | | | | | | | | | |
|---|---|---|---|---|---|---|---|---|---|
| Merkmal: | Einheit: | Ref. 4 | Ref. 5 | Bsp. 3 | Bsp. 4 | Bsp . 5 | Bsp. 6 | Bsp. 7 | Bsp 8 . |
| ML(1+4) bei 100°C, 3.Stufe | [ME] | 63 | 55 | 57 | 57 | 58 | 63 | 56 | 58 |
| Scorch-Zeit, t5 | [min] | 24,4 | 9,4 | 21,2 | 18,7 | 21,3 | 22,2 | 23,3 | 28,5 |
| Scorch-Zeit, t35 | [min] | 30,9 | 12,4 | 26,5 | 23,0 | 25,0 | 25,7 | 29,0 | 35,6 |
| Dmax-Dmin | [dNm] | 16,6 | 16,4 | 17,7 | 15,8 | 17,6 | 24,8 | 14,8 | 17,4 |
| t 10% | [min] | 1,6 | 1,0 | 2,1 | 1,9 | 1,9 | 1,3 | 2,3 | 2,3 |
| t 80% - t 20% | [min] | 2,2 | 7,1 | 5,0 | 2,3 | 1,5 | 1,5 | 2,4 | 2,7 |

| **Vulkanisatdaten** | | | | | | | | | |
|---|---|---|---|---|---|---|---|---|---|
| Merkmal: | Einheit: | | | | | | | | |
| Zugfestigkeit | [MPa] | 13,7 | 13,2 | 12,8 | 11,2 | 12,0 | 12,2 | 10,8 | 11,3 |
| Spannungswert 100% | [MPa] | 1,7 | 1,7 | 1,5 | 1,7 | 1,9 | 1,9 | 1,8 | 2,0 |
| Spannungswert 300% | [MPa] | 9,4 | 11,5 | 9,1 | 11,1 | 12,0 | 11,4 | 11,3 | -- |
| Bruchdehnung | [%] | 380 | 325 | 365 | 300 | 300 | 315 | 315 | 275 |
| Shore-A-Härte | [SH] | 62 | 56 | 56 | 57 | 59 | 62 | 58 | 60 |
| Ball-Rebound, 60°C | [%] | 66,0 | 75,8 | 70,0 | 71,0 | 72,0 | 71,1 | 71,8 | 72,5 |
| DIN-Abrieb | [mm³] | 72 | 68 | 57 | 49 | 50 | 57 | 49 | 52 |
| Kontakttemperatur | [°C] | 58 | 53 | 56 | 52 | 51 | 55 | 49 | 49 |
| Einstichtemperatur | [°C] | 101 | 94 | 104 | 93 | 91 | 95 | 86 | 84 |
| Permanent Set | [%] | 2,9 | 3,5 | 3,1 | 1,8 | 1,8 | 3,2 | 1,6 | 1,6 |
| Dyn. Dehnmodul E*, 0°C | [MPa] | 16,1 | 9,3 | 11,0 | 10,2 | 10,9 | 12,3 | 9,7 | 10,2 |
| Dyn. Dehnmodul E*, 60°C | [MPa] | 7,6 | 5,8 | 6,6 | 6,6 | 6,9 | 7,7 | 6,6 | 6,8 |
| Verlustfaktor tan δ, 0°C | [-] | 0,418 | 0,306 | 0,393 | 0,382 | 0,387 | 0,387 | 0,359 | 0,370 |
| Verlustfaktor tan δ, 60°C | [-] | 0,098 | 0,069 | 0,089 | 0,075 | 0,070 | 0,069 | 0,064 | 0,062 |

Wie man anhand der Ergebnisse der Tabelle 6 erkennen kann, wird durch die Veränderung des Mengenverhältnisses DPG zu TBzTD das Verarbeitungsverhalten der Rohmischungen gegenüber Referenzmischung 5 deutlich verbessert. Mooney-Scorch, t 10 % - Zeit und damit die Inkubationszeit werden signifikant angehoben und erreichen zum Teil das Niveau von Referenzmischung 4. Gleichzeitig erhält man ein zu Referenzmischung 5 vergleichbares Gummiwertebild, welches das der Referenzmischung 4 deutlich übertrifft.

### Beispiel 9-10:

Die für die hier beschriebenen Kautschukmischungen verwendete Rezeptur ist in der folgenden Tabelle 7 angegeben.

MPTES ist in diesem Beispiel γ-Mercaptopropyltriethoxysilan, das als VP Si263 von der Degussa AG erhältlich ist, und Silan B, das entsprechend Beispiel 9 der EP 0958298 B1 hergestellt werden kann, ist 3-Octanoylthio-1-propyltriethoxysilan.
Die Kautschukmischung wird dreistufig in einem Innenmischer gemäß Tabelle 2 hergestellt.
Die Prüfung der Rohmischungen erfolgt gemäß den in Tabelle 3 angegebenen Prüfmethoden.

**Tabelle 7**

| Substanz | Menge [phr] | Menge [phr] | Menge [phr] | Menge [phr] |
|---|---|---|---|---|
| 1. Stufe | Ref. 6 | Bsp. 9 | Ref. 7 | Bsp. 10 |
| Buna VSL 5025-1 | 96 | 96 | 96 | 96 |
| Buna CB 24 | 30 | 30 | 30 | 30 |
| Ultrasil 7000 GR | 80 | 80 | 80 | 80 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protector G35P | 1 | 1 | 1 | 1 |
| MPTES | 2,4 | 2,4 | - | - |
| Silan B | - | - | 8,9 | 8,9 |

| 2. Stufe | | | | |
|---|---|---|---|---|
| Batch Stufe 1 | | | | |
| 3. Stufe | | | | |
| Batch Stufe 2 | | | | |
| Vulkacit D | 2,0 | 0,25 | 2,0 | 0,25 |
| Perkacit TBzTD | 0,2 | 0,60 | 0,2 | 0,60 |
| Vulkacit CZ | 1,5 | 1,5 | 1,5 | 1,5 |
| Schwefel | 2,2 | 2,2 | 2,2 | 2,2 |

In der Tabelle 8 sind die Ergebnisse der Rohmischungsprüfungen für die untersuchten Mischungen aus Tabelle 7 angegeben.

**Tabelle 8**

| **Rohmischungsdaten** | | | | | |
|---|---|---|---|---|---|
| Merkmal: | Einheit: | Ref. 6 | Bsp.9 | Ref. 7 | Bsp.10 |
| ML(1+4) bei 100°C, 3.Stufe | [ME] | 63 | 74 | 55 | 62 |
| Scorch-Zeit, t5 | [min] | 8,4 | 23,3 | 18,9 | 48,9 |
| Scorch-Zeit, t35 | [min] | 11,0 | 28,1 | 26,5 | 58,1 |
| Dmax-Dmin | [dNm] | 13,5 | 22,4 | 15,4 | 18,7 |
| t 10% | [min] | 0,8 | 1,0 | 1,8 | 3,7 |
| t 80% - t 20% | [min] | 2,1 | 2,4 | 5,3 | 11,1 |

Wie in den vorherigen Beispielen bereits gezeigt führt auch bei diesen beiden mercaptofunktionellen Silanen die Veränderung des Beschleunigerverhältnisses zu Vorteilen in der Verarbeitungssicherheit. Sowohl die Scorch-Zeiten als auch die t 10 %-Zeit werden bei den Beispielen 9 und 10 gegenüber ihren beiden Referenzmischungen 6 und 7 verbessert.

## Patentansprüche

1. Kautschukmischungen, enthaltend
(A) einen Kautschuk oder eine Mischung von Kautschuken,
(B) einen Füllstoff,
(C) ein Organosilan der allgemeinen Formel I 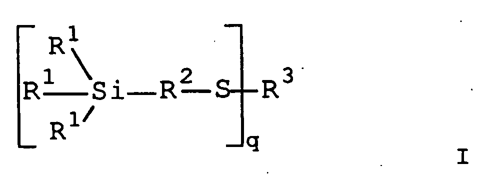 wobei R¹ gleich oder verschieden und aus C₁-C₁₂-Alkylgruppe oder R⁴O-Gruppe, mit R⁴ gleich oder verschieden und eine C₁-C₃₀ verzweigte oder unverzweigte einbindige Alkyl-, Alkenyl-, Aryl-, Aralkylgruppe oder (R⁵) ₃Si-Gruppe, mit R⁵ gleich C₁-C₃₀ verzweigten oder unverzweigten Alkyl- oder Alkenyl-Gruppe, ist, bestehen, R² eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
R³ gleich H, CN oder (C=O) -R⁶ für q=1, mit R⁶ gleich C₁-C₃₀ verzweigte oder unverzweigte einbindige Alkyl-, Alkenyl-, Aryl- oder Aralkylgruppe, (C=O) für q=2 und
P=S für q=3 ist und
q=1-3,
(D) ein Thiurambeschleuniger,
(E) ein stickstoffhaltigen Co-Aktivator, und (7) ein Sulfenamid-Beschleuniger,
**dadurch gekennzeichnet, daß** das Gewichtsverhältnis Thiurambeschleuniger (D) zu stickstoffhaltigem Co-Aktivator (E) größer 1 ist.

2. Kautschukmischungen gemäß Anspruch 1, **dadurch gekennzeichnet, daß** der Thiurambeschleuniger (D) ein Thiurammonosulfid, ein Thiuramdisulfid, ein Thiuramtetrasulfid oder ein Thiuramhexasulfid ist.

3. Kautschukmischungen gemäß Anspruch 1, **dadurch gekennzeichnet, daß** der stickstoffhaltige Co-Aktivator (E) ein Amin Co-Aktivator ist.

4. Kautschukmischungen gemäß Anspruch 1, **dadurch gekennzeichnet, daß** das Organosilan (C) auf einen inerten organischen oder anorganischen Träger aufgezogen oder mit einem organischen oder anorganischen Träger vorreagiert ist.

5. Kautschukmischungen gemäß Anspruch 1, **dadurch gekennzeichnet, daß** das Organosilan (C) ein Mercaptopropyltrialkoxysilan der Formel II 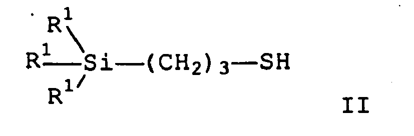 ist, bei dem R¹ aus Ethoxy, Dodecoxy, Tetradecoxy, Hexadecoxy und Octadecoxy ausgewählt mit Anteilen von jeweils 0% bis 100% ist.

6. Kautschmischungen nach Anspruch 1, **dadurch gekennzeichnet, daß** der Kautschuk (A) ein Lösungs-SBR ist.

7. Verfahren zur Herstellung der Kautschukmischungen gemäß Anspruch 1, **dadurch gekennzeichnet, daß** man den Kautschuk oder die Mischung von Kautschuken (A), einen Füllstoff (B), ein Organosilan der allgemeinen Formel I (C), ein Thiurambeschleuniger (D) und ein stickstoffhaltigen-Co-Aktivator (E) in einem Mischaggregat mischt.

8. Verwendung der Kautschukmischungen gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures comprising
(A) a rubber or a mixture of rubbers,
(B) a filler,
(C) an organosilane of the general formula I 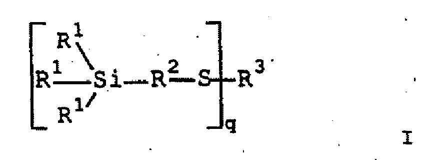 where each R¹ is the same or different and represents C₁-C₁₂-alkyl or R⁴O, where each R⁴ is the same or different and represents a C₁-C₃₀ branched or unbranched monovalent alkyl, alkenyl, aryl or aralkyl group or an (R⁵)₃Si group, where R⁵ represents a C₁-C₃₀ branched or unbranched alkyl or alkenyl group,
R² represents a branched or unbranched, saturated or unsaturated, aliphatic, aromatic or mixed aliphatic/aromatic divalent C₁-C₃₀ hydrocarbyl group,
R³ represents H, CN or (C=O)-R⁶ for q=1, where R⁶ represents a C₁-C₃₀ branched or unbranched monovalent alkyl, alkenyl, aryl or aralkyl group, (C=O) for q=2 and P=S for q=3, and
q=1-3,
(D) a thiuram accelerator,
(E) a nitrogen-containing co-activator, and
(F) a sulphenamide accelerator,
**characterized in that** the weight ratio of thiuram accelerator (D) to nitrogen-containing co-activator (E) is greater than 1.

2. Rubber mixtures according to Claim 1, **characterized in that** the thiuram accelerator (D) is a thiuram monosulphide, a thiuram disulphide, a thiuram tetrasulphide or a thiuram hexasulphide.

3. Rubber mixtures according to Claim 1, **characterized in that** the nitrogen-containing co-activator (E) is an amine co-activator.

4. Rubber mixtures according to Claim 1, **characterized in that** the organosilane (C) is applied to an inert organic or inorganic carrier or pre-reacted with an organic or inorganic carrier.

5. Rubber mixtures according to Claim 1, **characterized in that** the organosilane (C) is a mercaptopropyltrialkoxysilane of the formula II 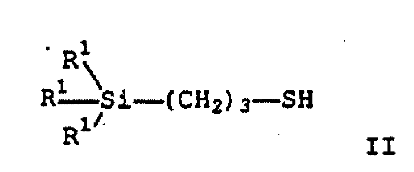 where R¹ is selected from ethoxy, dodecoxy, tetradecoxy, hexadecoxy and octadecoxy, the proportion of each being in the range from 0% to 100%.

6. Rubber mixtures according to Claim 1, **characterized in that** the rubber (A) is a solution SBR.

7. Process for the preparation of the rubber mixtures according to Claim 1, **characterized in that** the rubber or the mixture of rubbers (A), a filler (B) an organosilane of the general formula I (C), a thiuram accelerator (D) and a nitrogen-containing co-activator (E) are mixed in a mixing unit.

8. Use of the rubber mixtures according to Claim 1 in pneumatic tyres, tyre treads, cable sheaths, hoses, drive belts, conveyor belts, roller coverings, tyres, shoe soles, gaskets and damping elements.

## Revendications

1. Compositions de caoutchouc contenant
(A) un caoutchouc ou un mélange de caoutchoucs,
(B) une charge,
(C) un organosilane de formule générale I 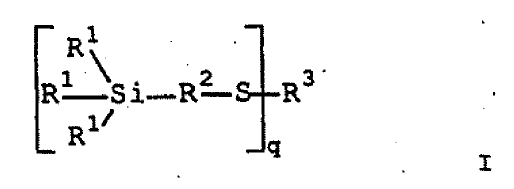 dans laquelle les radicaux R¹ sont identiques ou différents et représentent un groupe alkyle en C₁-C₁₂ ou un groupe R⁴O, R⁴ étant identique ou différent et représentant un groupe alkyle, alcényle, aryle, aralkyle en C₁-C₃₀ à une liaison, ramifié ou non ramifié, ou un groupe (R⁵)₃Si, où R⁵ représente un groupe alkyle ou alcényle en C₁-C₃₀, ramifié ou non ramifié,
R² est un groupe hydrocarboné en C₁-C₃₀ à deux liaisons, aliphatique ramifié ou non ramifié, saturé ou insaturé, aromatique ou mixte aliphatique/aromatique,
R³ représente H, CN ou (C=O)-R⁶ pour q = 1, où R⁶ représente un groupe alkyle, alcényle, aryle ou aralkyle en C₁-C₃₀ à une liaison, ramifié ou non ramifié, (C=O) pour q = 2 et P = S pour q = 3 et
q = 1-3,
(D) un accélérateur thiurame,
(E) un co-activateur azoté et
(F) un accélérateur sulfénamide,
**caractérisé en ce que** le rapport pondéral accélérateur thiurame (D) à co-activateur azoté (E) est supérieur à 1.

2. Compositions de caoutchouc selon la revendication 1, **caractérisées en ce que** l'accélérateur thiurame (D) est un monosulfure de thiurame, un disulfure de thiurame, un tétrasulfure de thiurame, ou un hexasulfure de thiurame.

3. Compositions de caoutchouc selon la revendication 1, **caractérisées en ce que** le co-activateur azoté (E) est un co-activateur amine.

4. Compositions de caoutchouc selon la revendication 1, **caractérisées en ce que** l'organosilane (C) est fixé sur un support organique ou inorganique inerte ou préalablement mis en réaction avec un support organique ou inorganique.

5. Compositions de caoutchouc selon la revendication 1, **caractérisées en ce que** l'organosilane (C) est un mercaptopropyltrialcoxysilane de formule II 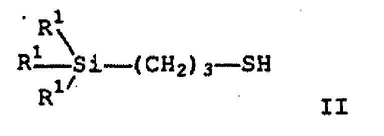 dans laquelle R¹ est choisi parmi les groupes éthoxy, dodécoxy, tétradécoxy, hexadécoxy et octadécoxy, en proportions chacun de 0 à 100 % en poids.

6. Compositions de caoutchouc selon la revendication 1, **caractérisées en ce que** le caoutchouc (A) est un caoutchouc SBR en solution.

7. Procédé pour la préparation de compositions de caoutchouc selon la revendication 1, **caractérisé en ce qu'**on mélange dans un appareil de mélange le caoutchouc ou le mélange de caoutchoucs (A), une charge (B), un organosilane de formule générale I (C), un accélérateur thiurame (D) et un co-activateur azoté (E).

8. Utilisation des compositions de caoutchouc selon la revendication 1, dans des pneumatiques à air, des bandes de roulement de pneumatiques, des gaines de câbles, des tuyaux souples, des courroies d'entraînement, des bandes transporteuses, des revêtements de cylindres, des pneumatiques, des semelles de chaussures, des rondelles d'étanchéité et des éléments amortisseurs.
